# FASCICULE DE BREVET EUROPEEN

(11) **EP 1 446 359 B1**
(45) Date de publication et mention de la délivrance du brevet: **17.08.2005**
(21) Numéro de dépôt: 02796859.3
(22) Date de dépôt: 22.11.2002
(51) Int. Cl.: C02F 11/00

(54) **PROCEDE ET DISPOSITIF DE TRAITEMENT DES BOUES HYDROPHILES PAR EFFET DE TURBULENCE HYDRAULIQUE ASSOCIEE A UNE OXYDATION ET DES REACTIONS CHIMIQUES PAR APPORT D'ADDITIFS**
VERFAHREN UND VORRICHTUNG ZUR BEHANDLUNG VON HYDROPHYLEN SCHLÄMMEN MITTELS HYDRAULISCHEN TURBULENZEN SOWIE EINE OXIDATION UND CHEMISCHE REAKTIONEN MIT ZUFÜHRUNG VON ZUSATZSTOFFEN
METHOD AND DEVICE FOR TREATING HYDROPHILIC SLUDGE BY HYDRAULIC TURBULENCE EFFECT COMBINED WITH OXIDATION AND CHEMICAL REACTIONS BY ADDITIVE INPUT

(30) Priorité: 22.11.2001 FR 0115120
(43) Date de publication de la demande: 18.08.2004
(73) Titulaire: Naturem Environnement, F-13016 Marseille (FR)
(72) Inventeur: BRISSET, Hervé, F-13510 Eguilles (FR)
(74) Mandataire: Domange, Maxime
(86) Numéro de dépôt international: PCT/FR2002/004006
(87) Numéro de publication internationale: WO 2003/043942

(56) Documents cités:
- EP-A- 0 261 822
- EP-A- 0 284 754
- EP-A- 1 157 972
- WO-A-98/58740
- DE-A- 3 612 313
- DE-A- 4 223 618
- DE-A- 19 610 926
- FR-A- 2 201 256
- US-A- 4 464 257
- US-A- 5 810 514

## Description

La présente invention concerne un dispositif de traitement des boues et de vases afin d'en permettre une réutilisation dans les filières des amendements de sol et des matériaux de construction.

Le domaine technique de l'invention est celui de la fabrication des appareils de traitement de boues et de vases.

Ces produits sont traditionnellement déshydratés par évaporation, par centrifugation ou par filtration de sorte de séparer la fraction solide de la fraction liquide.

Par évaporation, il s'agit de chauffer les produits afin d'extraire leur phase liquide.

Par filtration, il s'agit de séparer phases liquides et solides. La filtration est le principe de traitement le plus utilisé. Ces techniques sont les filtrations sous vide, filtrations sous pression en chambres étanches par filtres presses à plateaux chambrés, à plateaux membranes ou automatiques, ou encore filtres à bandes presseuses, presses à vis ou centrifugeuses.

Dans leur mise en oeuvre, ces techniques ont un rendement assez faible du fait de la caractéristique physique de l'eau dans les produits à traiter. L'eau se trouve sous deux formes, libre ou piégée dans la structure solide. Le rendement de ces dispositifs est souvent amélioré par l'adjonction d'additifs floculants ou coagulants.

L'efficacité de ces techniques d'évaporation et de filtration est limitée en raison de la texture des produits traités. Les boues et vases sont des produits aux phases liquides et solides difficilement dissociables du fait de l'existence de matières colloïdales. Ces matières sont constituées de molécules de très petites tailles, inférieures au dixième de micron, très difficiles à décanter dans l'eau et s'agglomérant en paquets hydrophiles au sein de la fraction solide. Par cet effet de rétention d'eau, ces matières empêchent une déshydratation efficace des boues et vases qui demeurent ainsi des produits très humides, denses, sans porosité, à la valorisation délicate notamment dans le domaine agricole.

Le procédé selon la présente invention a pour objectif de remédier au problème de séparation dans les boues et les vases grâce à une action forte sur la matière colloïdale. Issu d'études approfondies sur la texture de cette matière et d'une mise en perspective des potentialités de valorisation de ces produits, le procédé décrit ici comporte une suite de chocs mécaniques, d'oxydation et de réactions chimiques réalisées en continu au sein d'un appareil spécifique.

Les boues et vases traitées par cet appareil sont fortement hydratées et fluides ; elles comportent au moins 70 % d'eau. Le reste se compose de matières solides minérales et organiques dont une partie est la matière colloïdale. Les chocs mécaniques, l'oxydation et les réactions chimiques provoqués interviennent notamment directement sur la matière colloïdale en la cassant et en la faisant réagir avec un réactif afin de lui modifier la forme et de lui extraire l'eau structurelle. Cette matière, hydrophile à l'origine, rejoint grâce à ce traitement le reste de la fraction solide hydrophobe facilitant ainsi la dissociation des deux phases liquides et solides.

Les produits traités sont des produits organiques hydrophiles à des taux de matière organique souvent supérieurs à 40 % du total de la matière sèche tels que les boues de station d'épuration et les effluents de l'industrie agroalimentaire, brasseries, abattoirs, laiteries, conserveries, élevage, mais également des produits minéraux hydrophiles, dont la teneur en matière organique peut aussi dépasser 40 %, telles que les vases de dragage de rivières, canaux, étangs, lacs, bassins de rétention, ports, ou encore les boues fibreuses de l'industrie papetière.

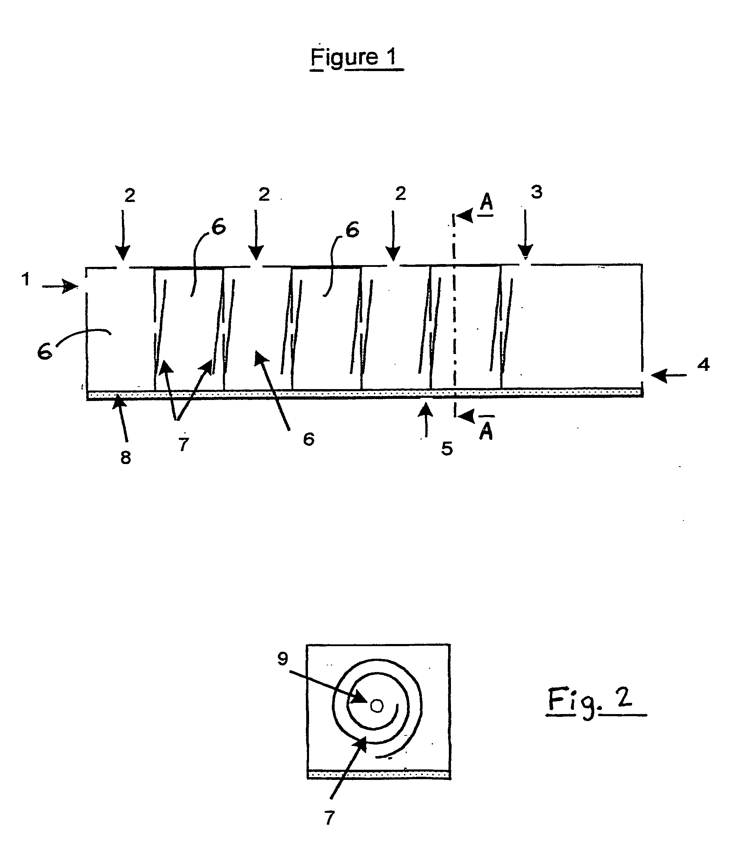

La description suivante, qui se réfère aux dessins annexés, donnée à titre d'exemple non limitatif, illustre une des formes préférées de réalisation de l'objet de l'invention ; la figure 1 est un dessin d'un appareil d'application du procédé, en vue en coupe longitudinale schématique ; la figure 2 est une vue en coupe transversale selon A-A de l'appareil illustré figure 1.

L'appareil est un caisson de forme parallélépipédique divisé en compartiments creux 6 séparés par des parois permettant le transfert 9 de matière d'un compartiment à l'autre et également munis au moins sur une de leur face d'un dispositif de ressorts 7 capable de provoquer une forte turbulence par des contre-courants à l'intérieur de chaque compartiment.

Chaque compartiment creux est ouvert vers l'extérieur par l'intermédiaire d'au moins un orifice circulaire 2 et 3 susceptible d'être connecté à un compresseur, une pompe ou autre appareil similaire. Le caisson est de forme allongée. Les sections extrêmes sont munies de dispositifs d'admission 1 des produits à traiter et de sortie 4 des produits traités.

En partie basse, l'appareil est muni d'un dispositif de filtration permettant d'évacuer une partie de la phase liquide au cours de son cheminement dans le caisson. La filtration est assurée par une structure textile 8 occupant la surface d'au moins un compartiment. L'évacuation s'effectue par gravité sous l'appareil. En fonction des produits traités, cette évacuation gravitaire 5 est ouverte ou fermée aux écoulements. L'appareil est fabriqué en acier oxydable ce qui permet de profiter de l'action catalytique des ions Fe ³⁺. L'appareil fonctionne sans limitation de débit par adaptation de ses dimensions. Il est par exemple constitué d'un caisson creux de forme parallélépipédique caractérisé par une section transversale à l'écoulement de faible surface et d'une longueur parallèle à l'écoulement de grande dimension d'au moins 3 fois la longueur du côté le plus long de la section transversale à l'écoulement.

Le procédé comporte deux phases, une phase où sont provoqués des chocs mécaniques et l'oxydation de la matière, et une phase où sont déclenchées des réactions chimiques grâce à l'adjonction d'additifs. Les deux phases sont consécutives. Le procédé fonctionne en continu sans phase de rétention.

Les produits à traiter sont introduits dans l'appareil à une de ses extrémités. Ils y subissent une phase de forte turbulence provoquée par l'introduction d'air sous pression et favorisée par la présence des ressorts solidaires des parois (ou intégrés aux parois) des compartiments de l'appareil. Ces compartiments creux sont définis par des parois positionnées perpendiculairement à l'écoulement. Ces parois qui assurent l'écoulement des produits, sont percées et munies d'un système de ressorts provoquant des courants opposés de matière et par conséquent les chocs recherchés : Les contre-courants provoquent des chocs des constituants de la matière permettant ainsi de casser les amas colloïdaux et d'effectuer une auto-filtration du produit entre ses différentes fractions induisant un tamisage entre fractions liquides et solides. Ces effets facilitent ainsi la séparation des deux phases solides et liquides. L'aération forcée et turbulente apporte une forte oxydation de la matière. L'aération des produits a d'autre part pour effet de détruire les micro-organismes anaérobies susceptibles de s'être développés.

Le produit passe d'un compartiment à l'autre en perdant de l'énergie et de l'eau.

L'eau traverse une structure textile filtrante située en fond de chaque compartiment. Ces structures filtrantes communiquent pour permettre à l'eau de s'évacuer par un orifice situé en fond d'appareil. Le produit poursuit son cheminement, dans l'appareil, agité d'une turbulence et d'une pression de plus en plus faible. Profitant d'une chute relative de la pression à l'intérieur de l'appareil, des additifs liquides ou solides sont introduits. Ces additifs aux propriétés coagulantes, sont de préférence choisis parmi le chlorure ferrique, le sulfate ferrique, le sulfate ferreux, le sulfate d'aluminium, le chloro sulfate de fer, les floculants polymères, le silicate de sodium, l'aluminate de sodium, les bases fortes, la chaux blutée, la chaux magnésienne, la chaux vive, la soude caustique, l'oxyde de magnésium, ou un mélange d'au moins deux de ces produits.

Ces additifs qui interviennent sur la matière solide baignent dans un- milieu oxydé afin d'en modifier les structures macroscopiques et microscopiques. Coagulants et floculants créent les conditions électromagnétiques nécessaires à agglomérer les particules solides hydrophobes afin d'élever la granulation de la fraction solide. Bases fortes, coagulants et floculants interviennent comme réactifs chimiques et catalyseurs ioniques. Ces additifs produisent une réaction sur la matière organique et sur la matière colloïdale dont les structures macroscopiques ont été cassées au sein des compartiments précédents fortement aérés. Accéléré par des conditions électromagnétiques favorables amenées par l'apport d'ions métalliques, des réactions d'acide base et d'oxydo-réduction s'établissent en faveur de l'oxydation et permettent ainsi la minéralisation d'une partie des structures ionisées de la matière organique et de la matière colloïdale. L'effet de montée du potentiel hydrogène vers des valeurs très fortes, 10 à 12, a pour conséquence de détruire les micro-organismes aérobies susceptibles de s'être développés au sein des produits.

La formation de conglomérats macroscopiques hydrophobes et de structures minérales microscopiques a également pour effet de réduire la densité de la fraction solide par apport de vide lacunaire poreux.

Grâce à l'intense brassage aérobie et l'addition des réactifs, la capacité d'échange entraîne l'absorption utile d'oxygène et l'oxydation des ions positifs et métalliques de manière irréversible concourrant à la stabilité désirée de la matière.

Les molécules s'étant formées en état d'anoxie plus ou moins prolongé sont ainsi transformées en leur forme oxydée. L'ammoniac NH₃ se transforme en nitrate NO₃, le sulfure d'hydrogène H₂S se transforme en acide sulfureux H₂SO₃. Le méthane CH₄ se transforme en dioxyde de carbone CO₂ et en eau H₂O.

Le procédé n'émet aucune odeur nauséabonde. Le produit final ne présente lui non plus aucune odeur.

Les métaux communs et lourds se trouvant dans le produit à traiter sous forme ionisés, sont transformés en leurs oxydes.

Les produits sortent de l'appareil par l'extrémité opposée à l'entrée. Avec le produit traité s'échappent de l'appareil les gaz strippés CO₂ et NO₃. Le produit traité est encore mélangé à l'eau qui se trouve maintenant majoritairement sous forme interstitielle. Sous cette forme, l'eau devient facile à extraire par évaporation, égouttage, centrifugation ou par pressage du produit.

Les produits obtenus après traitement peuvent être écoulés dans plusieurs filières. Dans la filière agricole, le produit devient un pré sol poreux apte à amender le complexe argilo humique des sols à condition que leurs faibles teneurs en métaux lourds, cuivre, zinc, plomb, cadmium, nickel, mercure ou sélénium le permettent. Dans la filière des matériaux de substitution, le produit, s'il est issu d'un produit initialement fortement minéralisé ou s'il l'est par le procédé, peut entrer dans les process industriels de fabrication de briques, parpaings ou autres matériaux de construction.

### Exemple de réalisation :

L'appareil de traitement comprenait une cuve en acier de 10 m de long et de 2 m de diamètre à l'intérieur de laquelle ont été positionnées 2 parois découpées de manière à ce que la section de passage de chaque découpe formée dans la paroi décrive une spirale, de sorte que chaque paroi assure une fonction de transfert des boues à traiter d'un compartiment au compartiment adjacent, ainsi qu'une fonction de ressort générateur de chocs et contre-courants.

Cet appareil était muni de deux vis d'Archimède remplissant le rôle d'extraction et de transfert de la boue après traitement. L'ensemble avait un poids à vide de 14 tonnes.

L'appareil comprenait un compresseur d'air basse pression fournissant un débit d'air de 1000 m3/h à 1,7 bar (absolu) de pression et de 2 systèmes de dosage et transfert de réactifs dans la cuve.

Le tout était alimenté par un groupe électrogène d'une puissance de 70 kW.

Deux types de réactifs ont été utilisés : de la chaux éteinte Ca(OH)2 en proportion de 5% du taux de matière organique contenue dans la boue entrant dans l'appareil, et un polymère cationique en proportion de 0,05% du taux de matière sèche (matière organique et minérale) contenue dans la boue entrant dans l'appareil.

Les parois situées à l'intérieur de la cuve était positionnées perpendiculairement à l'écoulement de la boue (et à l'axe longitudinal de la cuve).

Elles délimitaient trois compartiments successifs. Dans le premier, compté dans le sens d'écoulement de la boue, ont été introduits outre la boue, l'air comprimé et la chaux en solution aqueuse. Dans le deuxième a été introduit le polymère en solution aqueuse. Dans le troisième a eu lieu la décantation des matériaux lourds qui ont été extraits par les vis d'Archimède au fond de la cuve. De ce troisième compartiment était évacuée, par débordement, l'eau séparée de la fraction solide.

La boue d'une densité de 1,15, est entrée avec un débit de 407 m³/h soit 450 T/h. Elle présentait un taux de matière solide (de densité 2,5) de 10% en masse de la boue entrant, soit 45 T/h ou 18 m³/h.

Le taux de matière organique compris dans cette matière solide était dans une proportion de 10%, soit 4,5 T/h ; le reste de la matière solide était de la matière minérale.

Il a été introduit 1000 m³/h d'air sous 1,7 bar, 225 kg/h de chaux éteinte et 22,5 kg/h de polymère.

Après décantation et extraction par les vis d'Archimède, il a été récupéré une boue d'une densité de 1,7 avec un débit de 40 m³/h soit 67 T/h. La boue traitée sortant de l'appareil contenait 45 T/h soit 18 m³/h de matière solide pour 22 T/heure soit 22 m3/heure d'eau (densité 1).

En débordement de la cuve, l'eau séparée de la fraction solide de la boue a été récupérée avec un débit de 383 T/h soit 383 m³/h. Cette eau contenait un taux de matière solide de 0,02% soit 77 kg/h.

## Revendications

1. Dispositif de traitement en continu d'un produit constitué de boues ou vases hydrophiles comportant de préférence au moins 70 % d'eau, comprenant un caisson de forme allongée apte à être traversé dans le sens de la longueur par le dit produit traité entre au moins une entrée et une sortie du produit traité, **caractérisé en ce qu'**il comporte, en outre, au moins un orifice d'introduction d'air sous pression et au moins un orifice d'introduction d'additif chimique, et **en ce qu'**il comporte également au moins un dispositif de ressorts disposé à l'intérieur dudit caisson pour provoquer des contre-courants et une forte turbulence dans les produits traités.

2. Dispositif selon la revendication 1, **caractérisé en ce qu'**il comporte au moins deux compartiments (6) creux séparés par une paroi permettant le transfert (9) de matière d'un compartiment à l'autre.

3. Dispositif la revendication 2, **caractérisé en ce que** ledit dispositif de ressorts est solidaire de ladite paroi, séparant deux dits compartiments, pour provoquer des chocs mécaniques et une turbulence hydraulique dans au moins un desdits compartiments.

4. Dispositif selon la revendication 3, **caractérisé en ce que** ladite paroi est, en outre, percée et positionnée perpendiculairement à l'axe du caisson et à l'écoulement des produits traités.

5. Dispositif selon l'une des revendications 1 à 4, **caractérisé en ce que** le caisson présente une section transversale à l'écoulement et une longueur parallèle à l'écoulement d'une dimension d'au moins 3 fois la longueur du côté le plus long de la section transversale à l'écoulement.

6. Dispositif selon l'une des revendications 1 à 5, **caractérisé en ce que** le caisson comporte également un dispositif de filtration.

7. Dispositif selon la revendication 6, dans lequel la section transversale à l'écoulement est de faible surface.

8. Procédé de traitement en continu de boues et de vases hydrophiles contenant au moins 70 % d'eau et des matières organiques et colloïdales à l'aide d'un dispositif selon l'une des revendications 1 à 7, **caractérisé en ce que** :
- dans une première phase, on provoque une forte turbulence et des courants opposés de dites matières dans les boues ou vases traitées par introduction d'air sous pression et l'action de dit(s) ressort(s) au sein desdites boues ou vases traitées, et
- dans une deuxième phase, on provoque des réactions chimiques sur lesdites matières organiques et colloïdales par introduction d'additif(s) chimique(s).

9. Procédé selon la revendication 8, **caractérisé en ce que**, dans la dite première phase, on provoque une forte oxydation de la matière et on casse les amas colloïdaux y contenus.

10. Procédé selon la revendication 8 ou 9, **caractérisé en ce que** que, dans ladite deuxième phase, on apporte des additifs coagulants ou floculants.

11. Procédé selon l'une des revendications 8 à 10, **caractérisé en ce que** l'on introduit également au cours de ladite première ou deuxième phase, des bases fortes de façon à minéraliser la matière organique et la matière colloïdale.

12. Procédé selon la revendication 11, **caractérisé en ce que** l'on provoque une montée du pH à des valeurs allant de 10 à 12.

13. Procédé selon l'une des revendications 8 à 12, **caractérisé en ce que** l'on sépare l'eau et lesdits produits traités après ladite deuxième phase, par évaporation, égouttage, centrifugation ou par pressage desdits produits.

## Claims

1. A device for continuous treatment of a product comprising hydrophilic sludge or slime preferably containing at least 70% water, comprising a caisson elongated in shape for being run through in the longitudinal direction by said treated product between at least an inlet and an outlet for the treated product, wherein the device also comprises at least one orifice for introducing pressurised air and at least one orifice for introducing chemical additive, and in that it also comprises at least one elastic means device placed inside said caisson to cause counter-currents and strong turbulence in the treated products.

2. The device as claimed in Claim 1, wherein the device comprises at least two hollow compartments (6) separated by a wall allowing the transfer (9) of material from one compartment to the other.

3. The device as claimed in Claim 2, wherein said elastic means device is integral with said wall, separating two said compartments, to cause mechanical shocks and hydraulic turbulence in at least one of said compartments.

4. The device as claimed in Claim 3, wherein said wall is also pierced and placed perpendicularly to the axis of the caisson and to the flow of the treated products.

5. The device as claimed in Claim 1, wherein the caisson has a section transverse to the flow and a length parallel to the flow measuring 3 times the length of the longest side of the section transverse to the flow.

6. The device as claimed in Claim 1, wherein the caisson also comprises a filtration device.

7. The device as claimed in Claim 6, wherein the section transverse to the flow has a small surface.

8. A method for continuous treatment of hydrophilic sludge containing at least 70% water and organic and colloidal materials by means of a device as claimed in Claim 1, wherein:
- in a first phase, strong turbulence and opposing of said materials are caused in the treated sludge or slime by introduction of pressurised air and the action of said elastic means within said treated sludge or slime, and
- in a second phase, chemical reactions are caused on said organic and colloidal materials by the introduction of chemical additive(s).

9. The method as claimed in Claim 8, wherein in said first phase, strong oxidation of the material is caused and the colloidal masses contained therein are broken up.

10. The method as claimed in Claim 8, wherein in said second phase coagulant additives and flocculants are introduced.

11. The method as claimed in Claim 8, wherein during the course of said first or second phase strong bases are introduced so as to mineralise the organic mater and the colloidal material.

12. The method as claimed in Claim 11, wherein an increase in the pH of values ranging from 10 to 12 is made.

13. A method as claimed in Claim 8, wherein the water and said treated sludge or slime are separated after said second phase, by evaporation, draining, centrifuging or by pressing said products.

## Patentansprüche

1. Vorrichtung zur kontinuierlichen Behandlung eines Produkts, das aus hydrophilen Schlämmen oder Schlicken besteht, die vorzugsweise wenigstens 70% Wasser umfassen, umfassend einen Caisson von länglicher Form, der geeignet ist, in Längsrichtung vom dem das behandelte Produkt zwischen wenigstens einem Eingang und einem Ausgang des behandelten Produkts durchquert zu werden, **dadurch gekennzeichnet, daß** sie außerdem wenigstens eine Öffnung zur Einführung von Druckluft und wenigstens eine Öffnung zur Einführung eines chemischen Zusatzes umfaßt und daß sie auch wenigstens eine Federvorrichtung, angeordnet in dem Caisson umfaßt, um Gegenströmungen und eine starke Turbulenz in den behandelten Produkten hervorzurufen.

2. Vorrichtung nach Anspruch 1, **dadurch gekennzeichnet, daß** sie wenigstens zwei Hohlkompartimente (6) umfaßt, die durch eine Wand getrennt sind, die die Materialüberführung (9) von einem Kompartiment zum anderen ermöglicht.

3. Vorrichtung nach Anspruch 2, **dadurch gekennzeichnet, daß** die Federvorrichtung fest mit der Wand verbunden ist, die die beiden Kompartimente trennt, um mechanische Stöße und hydraulische Turbulenzen in wenigstens einem der Kompartimente hervorzurufen.

4. Vorrichtung nach Anspruch 3, **dadurch gekennzeichnet, daß** die Wand außerdem durchbrochen und senkrecht zur Achse des Caissons und zur Strömung der behandelten Produkte positioniert ist.

5. Vorrichtung nach einem der Ansprüche 1 bis 4, **dadurch gekennzeichnet, daß** der Caisson einen Strömungsquerschnitt und eine Länge parallel zur Strömung mit einer Abmessung von wenigstens 3-mal der Seitenlänge des längsten Strömungsquerschnitts aufweist.

6. Vorrichtung nach einem der Ansprüche 1 bis 5, **dadurch gekennzeichnet, daß** der Caisson auch eine Filtervorrichtung umfaßt.

7. Vorrichtung nach Anspruch 6, **dadurch gekennzeichnet, daß** der Strömungsquerschnitt mit kleiner Oberfläche ist.

8. Verfahren zur kontinuierlichen Behandlung von hydrophilen Schlämmen oder Schlicken, die wenigstens 70% Wasser und organische und kolloidale Materialien enthalten, mittels einer Vorrichtung nach einem der Ansprüche 1 bis 7, **dadurch gekennzeichnet, daß**:
- man in einer ersten Phase eine starke Turbulenz und entgegengerichtete Strömungen der Materialien in den behandelten Schlämmen oder Schlicken durch Einführung von Druckluft und die Wirkung der Feder(n) in den behandelten Schlämmen oder Schlicken hervorruft und
- man in einer zweiten Phase chemische Reaktionen auf den organischen und kolloidalen Materialien durch Einführung chemischer Zusätze (chemischen Zusatzes) hervorruft.

9. Verfahren nach Anspruch 8, **dadurch gekennzeichnet, daß** man in der ersten Phase eine starke Oxidation des Materials hervorruft und man die dort enthaltenen kolloidalen Ansammlungen zerkleinert.

10. Verfahren nach Anspruch 8 oder 9, **dadurch gekennzeichnet, daß** man in der zweiten Phase Koagulier- und Flockungsmittel hinzugibt.

11. Verfahren nach einem der Ansprüche 8 bis 10, **dadurch gekennzeichnet, daß** man auch bei der ersten oder zweiten Phase starke Basen derart einführt, daß das organische Material und das kolloidale Material mineralisiert werden.

12. Verfahren nach Anspruch 11, **dadurch gekennzeichnet, daß** man einen pH-Anstieg auf Werte hervorruft, die von 10 bis 12 gehen.

13. Verfahren nach einem der Ansprüche 8 bis 12, **dadurch gekennzeichnet, daß** man das Wasser und die behandelten Produkte nach der zweiten Phase durch Verdampfen, Abtropfen, Zentrifugieren oder durch Pressen der Produkte trennt.
